# EUROPÄISCHE PATENTSCHRIFT

(11) **EP 0 870 637 B1**
(45) Veröffentlichungstag und Bekanntmachung des Hinweises auf die Patenterteilung: **24.04.2002**
(21) Anmeldenummer: 98100650.5
(22) Anmeldetag: 15.01.1998
(51) Int. Cl.: B60J 7/22

(54) **Betätigungsvorrichtung für einen Windabweiser an einem Fahrzeug-Schiebedach**
Actioning device for wind deflector for sliding roof of vehicle
Dispositif d'actionnement pour déflecteur de vent pour toit coulissant de véhicule

(30) Priorität: 08.04.1997 DE 19714492
(43) Veröffentlichungstag der Anmeldung: 14.10.1998
(73) Patentinhaber: Bayerische Motoren Werke Aktiengesellschaft, 80788 München (DE)
(72) Erfinder: Clausen-Schaumann, Andreas, 82347 Bernried (DE); Illmann, Holger, 82178 Puchheim (DE)

(56) Entgegenhaltungen:
- CH-A- 298 423
- DE-U- 1 779 679
- PATENT ABSTRACTS OF JAPAN vol. 7, no. 187 (M-236) [1332] , 16. August 1983 & JP 58 089419 A (TOYO KOGYO K.K.), 27. Mai 1983

## Beschreibung

Die Erfindung betrifft eine Betätigungsvorrichtung für einen durch einen Schwenkmechanismus verschwenkbaren Windabweiser an einem Fahrzeug-Schiebedach, der neben einer Ruhestellung bei geschlossenem Schiebedach-Deckel und einer vollständig ausgeschwenkten Position bei geöffnetem Schiebedach-Deckel gezielt in eine zwischen diesen beiden Positionen liegende Zwischenposition bringbar ist. Eine derartige Betätigungsvorrichtung ist aus JP 58 089 419 bekannt.

Üblicherweise sind für den Windabweiser an einem Fahrzeug-Schiebedach lediglich zwei Positionen vorgesehen. Die eine Position ist die Ruheposition, in welcher das Schiebedach geschlossen ist und die zweite Position ist die ausgestellte bzw. vollständig ausgeschwenkte Position, die der Windabweiser nach einem Öffnen des Schiebedachdeckels einnimmt.
In bestimmten Fahrgeschwindigkeitsbereichen kann sich bei bestimmten Öffnungspositionen eines Fahrzeug-Schiebedachdeckels ein unangenehmes Geräuschniveau im Fahrzeug einstellen. Bei relativ niedrigen Fahrzeug-Geschwindigkeiten können bei geöffnetem Schiebedach Wummergeräusche auftreten, während sich bei höheren Geschwindigkeiten unangenehme Pfeif- oder Zischgeräusche einstellen können, die in Abhängigkeit von der Öffnungsstellung des Schiebedaches partiell auch durch den Windabweiser verursacht werden.

Eine Abhilfemaßnahme für diese geschilderte Problematik ist in JP 58 089 419 beschrieben. Eine weitere insbesondere im Hinblick auf die Betätigung des Windabweisers vorteilhafte Lösung aufzuzeigen, ist Aufgabe der vorliegenden Erfindung.
Die Lösung dieser Aufgabe ist gekennzeichnet durch einen unterschiedlich positionierbaren, bei geschlossenem Schiebedach-Deckel vom Schwenkmechanismus losgelösten Mitnehmer, der bei zumindest teilweise geöffnetem Schiebedach-Deckel mit dem Schwenkmechanismus in Eingriff kommt und danach positionsabhängig den Windabweiser in unterschiedliche Zwischenpositionen bringt.

Mit den erfindungsgemäßen Merkmalen ergibt sich insofern eine einfache Betätigungsvorrichtung, als der Windabweiser mit einem Öffnen des Schiebedaches zunächst wie üblich vollständig ausgeschwenkt werden kann, und zwar durch eine einfache bekannte Mechanik. Durch die gleiche einfache bekannte Mechanik kann der Windabweiser in seine Ruhestellung gebracht werden. Lediglich für das spezielle Positionieren des Windabweisers in die sog. Zwischenpostitionen kommt erfindungsgemäß eine separate Betätigungsvorrichtung zum Einsatz, und zwar nur dann, wenn dieses spezielle Positionieren erwünscht ist, nämlich bei zumindest teilweise, bevorzugt im wesentlichen vollständig geöffnetem Schiebedach-Deckel.

Mit dem Schwenkmechanismus des Windabweisers kommt somit ein Mitnehmer in Eingriff, wenn der Windabweiser in eine sog. Zwischenposition zwischen den o.g. Extrempositionen, nämlich der Ruheposition einerseits und der vollständig ausgeschwenkten Position andererseits, gebracht werden soll. Dabei kann der Schwenkmechanismus als ein mit einer verdrehbaren Schwenkachse des Windabweisers verbundenes Kulissenstück ausgebildet sein, an dessen Kulissenbahn der Mitnehmer bei zumindest teilweise geöffnetem, bevorzugt jedoch im wesentlichen vollständig geöffnetem Schiebedach-Deckel angreift.

Um den Windabweiser bzw. den diesen betätigenden Mitnehmer in die jeweils günstigste Position - diese kann abhängig sein von der Stellung des Schiebedach-Deckels undloder von der Fahrzeug-Fahrgeschwindigkeit und/oder von der Luft-Strömungsgeschwindigkeit im Bereich des Windabweisers - zu bringen, kann für den Mitnehmer ein eigener Stellantrieb vorgesehen sein. Alternativ kann der Mitnehmer mit dem Schiebedach-Deckel verbunden sein, derart, daß eine geringfügige Verschiebung dieses Schiebedach-Deckels bspw. in der Umgebung seiner nahezu vollständigen Offenposition die gewünschte Verschwenkung des Windabweisers verursacht, da dann kein eigener Stellantrieb für den Mitnehmer erforderlich ist. Besonders vorteilhaft ist es jedoch, wenn der Mitnehmer durch ein zumindest teilweise unabhängig vom Schiebedach-Deckel bewegbares weiteres Schiebedach-Element positionierbar ist, da einerseits auch dann kein eigener Stellantrieb für den Mitnehmer erforderlich ist, andererseits jedoch der Windabweiser unabhängig vom Schiebedach-Deckel bewegt werden kann. Bei diesem weiteren Schiebedach-Element kann es sich beispielsweise um einen sogenannten Schwebehimmel handeln, der zum Fahrzeuginnenraum hin unterhalb des Schiebedach-Deckels angeordnet ist und der - zumindest im gewissen Umfang - unabhängig vom Schiebedach-Deckel verschiebbar ist. Die Verschwenkbewegung des Windabweisers kann somit an geringe Verschiebebewegungen des Schwebehimmels gekoppelt sein.
Weitere vorteilhafte Aus- und Weiterbildungen sind Inhalt der übrigen Unteransprüche.

Näher erläutert wird die Erfindung anhand eines lediglich prinzipiell dargestellten bevorzugten Ausführungsbeispieles, wobei nur die für das Verständnis der Erfindung erforderlichen Elemente gezeigt sind. Dabei zeigt
- Figur 1: einen Teil-Längsschnitt durch einen Fahrzeugdachrahmen im Bereich des Windabweisers, wobei der zugeordnete Schiebedach-Deckel zumindest teilweise geöffnet ist
- Figur 2: die Ansicht X aus Figur 1 sowie
- Figur 3: den Schnitt A-A aus Figur 1.

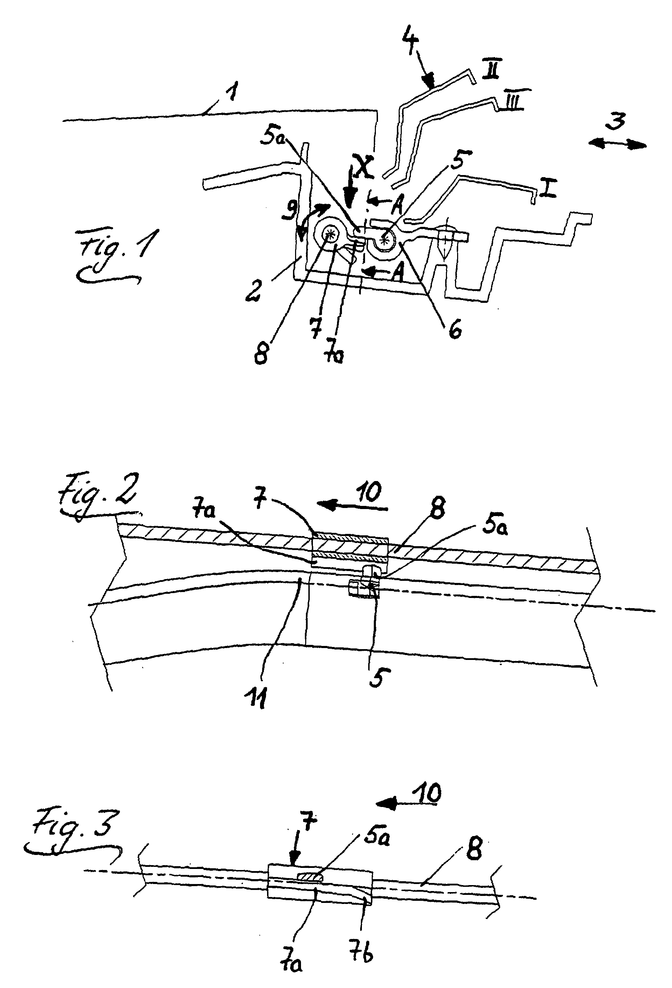

In Figur 1 ist mit der Bezugsziffer 1 der vordere Dachrahmen eines ein Schiebedach aufweisenden FahrzeugeslPersonenkraftwagens bezeichnet, wobei der gemäß Pfeilrichtung 3 - diese ist parallel zur Fahrzeug-Längsache - verschiebbare Schiebedach-Deckel zumindest teilweise geöffnet und daher nicht dargestellt ist. Wie üblich ist unterhalb des vorderen Dachrahmens 1 ein Aufnahmerahmen 2 für einen dem Fachmann bekannten Windabweiser 4 vorgesehen, welcher in drei verschiedenen Positionen dargestellt ist.

Mit 1 ist die sogenannte Ruheposition des Windabweisers 4 bezeichnet, in welcher dieser vollständig abgesenkt ist. Hierbei ist das Schiebedach geschlossen, d. h. der (nicht gezeigte) Schiebedach-Deckel überdeckt den hier dargestellten Ausschnitt des Fahrzeug-Dachrahmens vollständig. Die mit II bezeichnete Windabweiser-Position stellt die bislang übliche (einzige) Ausstellposition dar, in welcher dieser Windabweiser 4 vollständig ausgeschwenkt ist, wenn das Schiebedach bzw. der Schiebedach-Deckel zumindest teilweise geöffnet ist.
Erfindungsgemäß kann nun jedoch der Windabweiser 4 zusätzlich Zwischenpositionen zwischen den beiden Extrempositionen I und II einnehmen, so beispielsweise die mit III bezeichnete Position oder dieser benachbarte Positionen. Während sich - wie eingangs erläutert - in Abhängigkeit von der Öffnungsstellung des Schiebedach-Deckels sowie in Abhängigkeit von der jeweiligen Fahrgeschwindigkeit des Fahrzeuges in der Position II teilweise unangenehme Zisch- oder Pfeifgeräusche einstellen können, treten diese Geräusche beispielsweise in der Position III aufgrund der geänderten Strömungsverhältnisse im Bereich des Windabweisers 4 nicht mehr oder zumindest deutlich abgemindert auf.

In unterschiedliche Positionen III, die zwischen den beiden Extrempositionen I und II liegen, kann der Windabweiser 4 durch einen Mitnehmer 5 gebracht werden, der in einer Schiene 6 verschiebbar geführt ist. Mit einem Arm 5a greift dieser Mitnehmer 5 nämlich an einer Kulissenbahn 7a eines Kulissenstückes 7 an, welches auf der Schwenkachse 8 des Windabweisers 4 starr angeordnet ist. Die ihrerseits auf nicht gezeigte Weise um ihre Längsachse drehbar gelagerte Schwenkachse 8 ist fest mit dem Windabweiser 4 verbunden, so daß bei einem Verdrehen der Schwenkachse 8 gemäß Pfeilrichtung 9 (vgl. Fig. 1) der Windabweiser 4 in die zwischen den Positionen I und II liegende Position III oder in weitere Zwischenstellungen gebracht werden kann.
Initiiert wird diese Verdrehbewegung der Schwenkachse 8 dabei durch den Mitnehmer 5, der (in Fig. 1 senkrecht zur Zeichenebene) in der parallel zur Schwenkachse 8 verlaufenden Schiene 6 verschiebbar ist. Wie Fig. 3 zeigt, verläuft nämlich die Kulissenbahn 7a nicht parallel zur Schwenkachse 8, sondern gegenüber dieser geneigt, so daß durch eine Verschiebung des Mitnehmers 5 in bzw. gegen Pfeilrichtung 10 (vgl. Fig. 2, 3) die Schwenkachse 8 gemäß Pfeilrichtung 9 verdreht und somit auch der Windabweiser 4 in unterschiedliche Schwenkstellungen III, die zwischen den Positionen I, II liegen, gebracht wird. Wie ersichtlich liegt nämlich der Arm 5a des Mitnehmers 5 auf der Kulissenbahn 7a auf, nachdem dieser gemäß Pfeilrichtung 10 "von rechts her kommend" über eine Auflauframpe 7b des Kulissenstückes 7 auf dessen Kulissenbahn 7a aufgefahren ist. Da nun in Pfeilrichtung 10 die Kulissenbahn 7a quasi ansteigend verläuft, wird in der Darstellung nach Fig.3 das Kulissenstück 7 "nach unten" gedrückt, wenn der Mitnehmer 5 weiter gemäß Pfeilrichtung 10 nach links gefahren wird. Durch dieses "Drücken nach unten" wird aber das Kulissenstück 7 wie gewünscht verschwenkt und der Winabweiser 4 von der Position II bspw. in die Position III gebracht.
Die gezeigte Kulissenbahn 7a des Kulissenstückes 7 ist "nach oben hin" offen, um zu ermöglichen, daß der Windabweiser 4 auch von außen (bspw. von Hand) von der Position II ind die Position I gedrückt werden kann, ohne den Mitnehmer 5 und das Kulissenstück 7 zu beschädigen. Grundsätzlich könnte jedoch abweichend vom gezeigten Ausführungsbeispiel auch eine sog. geschlossene Kulissenbahn im Kulissenstück 7 vorgesehen sein. Auch ist ohneweiteres eine kinematische Umkehr möglich, derart, daß der Mitnehmer 5 in einer entsprechend geneigt verlaufenden Schiene 6 geführt ist.

Zurückkommend auf das beschriebene Ausführungsbeispiel ist -wie Fig. 2 zeigt- am Mitnehmer 5 ein Antriebskabel 11 befestigt, welches mit einem zumindest teilweise unabhängig vom Schiebedach-Deckel bewegbaren, hier nicht gezeigten Schiebedach-Element mechanisch verbunden ist. Bei diesem weiteren zumindest teilweise unabhängig vom Schiebedach-Deckel bewegbaren Schiebedach-Element handelt es sich bevorzugt um einen unterhalb des Schiebedach-Deckels angeordneten Schwebehimmel.
Wird nun dieses weitere Schiebedach-Element bzw. dieser Schwebehimmel geringfügig verfahren (und zwar ebenfalls gemäß Pfeilrichtung 3 in Fig. 1), so wird diese Verschiebebewegung des Schwebehimmels über das Antriebskabel 11 auf den Mitnehmer 5 übertragen, so daß dieser in bzw. gegen Pfeilrichtung 10 verschoben wird und somit, wie oben erläutert, das Kulissenstück 7 und hierdurch die Schwenkachse 8 und somit letztlich den Windabweiser 4 verschwenkt. Eine signifikante Verschiebung des Schwebehimmels bzw. des weiteren Schiebedach-Elementes ist dabei nicht erforderlich, vielmehr genügen -wie ersichtlich- bereits geringfügige Verschiebewege, um den Windabweiser 4 in unterschiedliche Positionen III, die zwischen den beiden Extrempositionen I, II liegen, zu bringen.
Bevorzugt ist der Schwebehimmel bzw. das weitere Schiebedach-Element durch einen eigenen Stellantrieb positionierbar, der jedoch in vorteilhafter Funktionsvereinigung gleichzeitig für die Positionierung des Windabweisers 4 sorgt.

Bevorzugt soll der Windabweiser 4 nur dann in die Zwischenposition(en) III gebracht werden, wenn der Schiebedach-Deckel nahezu vollständig, zumindest jedoch teilweise geöffnet ist. Daher kommt der Mitnehmer 5 mit dem sog. Schwenkmechanismus des Windabweisers 4, der durch die Schwenkachse 8 mit dem beschriebenen Kulissenstück 7 gebildet wird, erst dann in Eingriff, wenn der Schiebedach-Deckel zumindest teilweise, bevorzugt jedoch im wesentlichen vollständig geöffnet ist. Auch dies ist im beschriebenen Ausführungsbeispiel in vorteilhafter Weise realisiert, und zwar im Einzelnen über die Auflauframpe 7b der Kulissenbahn 7a bzw. des Kulissenstückes 7.
Indem nämlich der Mitnehmer 5 wie hier beschrieben durch Verschieben des Schwebehimmels bewegt wird, wird dieser Mitnehmer 5 mit seinem Arm 5a auch erst bei nahezu vollständig geöffnetem Schwebehimmel auf die Kulissenbahn 7a des Kulissenstückes 7 geführt. Ermöglicht wird dies einerseits durch die den Mitnehmer 5 führende Schiene 6 und andererseits dadurch, daß sich der Windabweiser 4 zuvor in der definierten und auch gewünschen Position II befindet. In anderen Worten bedeutet dies, daß ausgehend vom geschlossenen Zustand des Schiebedaches, in welcher nicht nur der Schiebedach-Deckel, sondern auch der Schwebehimmel die Schiebedach-Dachluke des Fahrzeuges vollständig abdeckt, sowohl der Schiebedach-Deckel als auch der Schwebehimmel zunächst in seine nahezu vollständig geöffnete Position gefahren werden kann, ehe der Mitnehmer 5 mit dem Kulissenstück 7 in Eingriff kommt, wobei zunächst der Windabweiser 4 durch eine übliche und daher nicht gezeigte Mechanik von seiner Ruheposition I wie gewünscht in die vollständig ausgeschwenkte Position II gebracht wird. In der näheren Umgebung der nahezu vollständigen Offenposition des Schwebehimmels bzw. Schiebedach-Deckels hingegen kann dann durch eine geringfügige Verschiebebewegung des Schwebehimmels der Windabweiser 4 auf die beschriebene Weise in die gewünschte Position III bzw. in hierzu benachbarte Positionen gebracht werden. Diese geringfügige Bewegung des Schwebehimmels 4 in der Umgebung der nahezu vollständig geöffneten Position ist dabei für die Insassen des Fahrzeuges praktisch nicht mehr wahrnehmbar, jedoch - wie geschildert - ausreichend für die Steuerung des Windabweisers 4.

Die Ansteuerung des insbesondere elektromotorischen Stellantriebes für den Schwebehimmel bzw. das weitere unabhängig vom Schiebedach-Deckel bewegbare Schiebedach-Element erfolgt bevorzugt durch eine Steuerelektronik in Abhängigkeit von der Fahrzeug-Geschwindigkeit. Diese Steuerelektronik steuert dabei geschwindigkeitsabhängig die Bewegungsrichtung und den Weg des Schwebehimmels/Schiebedach-Elementes und steuert so die Ausstellhöhe bzw. die Schwenkstellung des Windabweisers 4 in bzw. in der Umgebung der Position III.

Ein in der beschriebenen Art verschwenkbarer Windabweiser 4 erlaubt eine Anpassung der Windabweiserstellung an die jeweilige Fahrgeschwindigkeit des Fahrzeuges. So ist nämlich bei niedrigen Fahrgeschwindigkeiten eine große Ausstellung des Windabweisers erwünscht, um das Wummerverhalten im Fahrzeuginnenraum positiv zu beeinflussen. Da aber eine solch große Ausstellung bei hohen Fahrgeschwindigkeiten starke Windgeräusche verursacht, ist dann eine derart starke Ausstellung beispielsweise entsprechend der Schwenk-Position II nicht mehr erwünscht, weshalb dann mit der beschriebenen Betätigungsvorrichtung der Windabweiser 4 in die Position III gebracht wird. Dies reduziert die Geräuschbelastung der Fahrzeuginsassen wesentlich.

Vorteilhafterweise ist beim beschriebenen Ausführungsbeispiel kein eigener Stellantrieb für den Windabweiser erforderlich, da dieser über einen separat angetriebenen Schwebehimmel positioniert wird. Jedoch ist selbstverständlich auch ein eigener Stellantrieb für den Windabweiser 4 bzw. für den diesen betätigenden Mitnehmer möglich. Darüber hinaus können selbstverständlich eine Vielzahl weiterer Details insbesondere konstruktiver Art durchaus abweichend vom gezeigten Ausführungsbeispiel gestaltet sein, ohne den Inhalt der Patentansprüche zu verlassen.

## Patentansprüche

1. Betätigungsvorrichtung für einen durch einen Schwenkmechanismus verschwenkbaren Windabweiser (4) an einem Fahrzeug-Schiebedach, der neben einer Ruhestellung (1) bei geschlossenem Schiebedach-Deckel und einer vollständig ausgeschwenkten Position (II) bei geöffnetem Schiebedach-Deckel gezielt in eine zwischen diesen beiden Positionenen (I, II) liegende Zwischenposition (III) bringbar ist,
**gekennzeichnet durch** einen unterschiedlich positionierbaren, bei geschlossenem Schiebedach-Deckel vom Schwenkmechanismus losgelösten Mitnehmer (5), der bei zumindest teilweise geöffnetem Schiebedach-Deckel mit dem Schwenkmechanismus in Eingriff kommt und danach positionsabhängig den Windabweiser (4) in unterschiedliche Zwischenpositionen (III) bringt.

2. Betätigungsvorrichtung nach Anspruch 1,
**dadurch gekennzeichnet, daß** der Schwenkmechanismus als ein mit einer verdrehbaren Schwenkachse (8) des Windabweisers (4) verbundenes Kulissenstück (7) ausgebildet ist, an dessen Kulissenbahn (7a) der Mitnehmer (5) bei zumindest teilweise geöffnetem Schiebedach-Deckel angreift.

3. Betätigungsvorrichtung nach Anspruch 2,
**dadurch gekennzeichnet, daß** der in einer Schiene (6) geführte Mitnehmer (5) bei im wesentlichen vollständig geöffnetem Schiebedach-Deckel mit einem Arm (5a) an der Kulissenbahn (7a) des Kulissenstückes (7) anliegt.

4. Betätigungsvorrichtung nach Anspruch 2 oder 3,
**dadurch gekennzeichnet, daß** der Mitnehmer (5) im mit dem Schwenkmechanismus verbundenen Zustand durch die Schiene (6) geführt parallel zur Schwenkachse (8) verschiebbar ist und die Kulissenbahn (7a) gegenüber der Schwenkachse (8) geneigt verläuft.

5. Betätigungsvorrichtung nach einem der vorangegangenen Ansprüche,
**dadurch gekennzeichnet, daß** der Mitnehmer (5) durch ein bewegbares Schiebedach-Element oder durch einen Stellantrieb positionierbar ist.

6. Betätigungsvorrichtung nach Anspruch 5,
**dadurch gekennzeichnet, daß** das bewegbare Schiebedach-Element zumindest teilweise unabhängig vom Schiebedach-Deckel positionierbar ist.

7. Betätigungsvorrichtung nach Anspruch 6,
**dadurch gekennzeichnet, daß** das zumindest teilweise unabhängig vom Schiebedach-Deckel bewegbare Schiebedach-Element ein unterhalb des Schiebedach-Deckels angeordneter Schwebehimmel ist.

8. Betätigungsvorrichtung nach einem der vorangegangenen Ansprüche,
**dadurch gekennzeichnet, daß** der Mitnehmer (5) über ein Antriebskabel (11) mit dem Stellantrieb oder mit dem zumindest teilweise unabhängig vom Schiebedach-Deckel bewegbaren Schiebedach-Element verbunden ist

9. Betätigungsvorrichtung nach einem der vorangegangenen Ansprüche,
**dadurch gekennzeichnet, daß** die Position des Mitnehmers (5) und somit des Windabweisers (4) abhängig ist von der Stellung des Schiebedaches und/oder von der Fahrzeug-Fahrgeschwindigkeit und/oder von der Luft-Strömungsgeschwindigkeit im Bereich des Windabweisers (4).

## Claims

1. An actuating mechanism for a pivoting wind deflector (4) on a vehicle sliding roof, which, as well as having a rest position (I) with the sliding roof cover closed and a fully pivoted out position (II) with the sliding roof cover open, can be brought as desired into an intermediate position (III) between these two positions (I, II),
**characterised by** a variably positioned driving member (5) which is freed from the pivoting mechanism when the sliding roof cover is closed, which with an at least partly opened sliding roof cover comes into engagement with the pivoting mechanism and thereafter depending on the position brings the wind deflector (4) into different intermediate positions (III).

2. An actuating mechanism according to Claim 1,
**characterised in that** the pivoting mechanism is configured as a track piece (7) joined to a rotating pivoting axle (8) of the wind deflector (4), in whose track rail (7a) the driving member (5) engages when the sliding roof cover is at least partly opened.

3. An actuating mechanism according to Claim 2,
**characterised in that** an arm (5a) of the driving member (5), guided in a track (6), abuts onto the track rail (7a) of the track piece (7) when the sliding roof cover is essentially fully opened.

4. An actuating mechanism according to Claim 2 or Claim 3,
**characterised in that** the driving member (5), in the condition connected to the pivoting mechanism, can slide along the track (6) guided parallel to the pivoting axle (8) and the track rail (7a) runs at an incline to the pivoting axle (8).

5. An actuating mechanism according to one of the foregoing Claims,
**characterised in that** the driving member (5) can be positioned by a movable sliding roof element or by a positioning drive.

6. An actuating mechanism according to Claim 5,
**characterised in that** the movable sliding roof element can be positioned at least partly independently of the sliding roof cover.

7. An actuating mechanism according to Claim 6,
**characterised in that** the sliding roof element which can be moved at least partly independently of the sliding roof cover is a floating ceiling arranged below the sliding roof cover.

8. An actuating mechanism according to one of the foregoing claims,
**characterised in that** the driving member (5) is joined via a drive cable (11) to the positioning drive or to the movable sliding roof element which is at least partly independent of the sliding roof cover.

9. An actuating mechanism according to one of the foregoing claims,
**characterised in that** the position of the driving member (5) and thus of the wind deflector (4) is dependent on the position of the sliding roof and/or on the air stream velocity in the region of the wind deflector (4).

## Revendications

1. Dispositif d'actionnement d'un déflecteur (4) basculé par un mécanisme de basculement d'un toit coulissant de véhicule, qui peut, en plus de sa position de repos (I), lorsque le toit coulissant est fermé, et une position de déploiement complète (II), lorsque le toit coulissant est ouvert, être conduit de façon commandée dans une position intermédiaire (III) située entre ces deux positions (I, II),
**caractérisé en ce qu'**
un organe d'entraînement (5), susceptible d'être positionné différemment, détaché du mécanisme de basculement lorsque le panneau de toit coulissant est fermé, arrive en prise avec le mécanisme de basculement au moins lorsque le panneau de toit coulissant est partiellement ouvert, et ensuite, en fonction de sa position, conduit le déflecteur (4) dans des positions intermédiaires (III) différentes.

2. Dispositif d'actionnement selon la revendication 1,
**caractérisé en ce que**
le mécanisme de basculement est réalisé sous la forme d'un coulisseau (7) relié à l'axe de basculement (8) rotatif du déflecteur (4), et l'organe d'entraînement (5) attaque son chemin de coulisse (7a) lorsque le panneau de toit coulissant est au moins partiellement ouvert.

3. Dispositif d'actionnement selon la revendication 2,
**caractérisé en ce que**
l'organe d'entraînement (5), guidé dans un rail (6), est appliqué lorsque le panneau de toit coulissant est pratiquement complètement ouvert, par un bras (5a) contre le chemin de coulisse (7a) du coulisseau (7).

4. Dispositif d'actionnement selon l'une quelconque des revendications 2 ou 3,
**caractérisé en ce que**
l'organe d'entraînement (5) peut coulisser à l'état relié au mécanisme de basculement en étant guidé par le rail (6), parallèlement à l'axe de basculement (8) et le chemin de coulisse (7a) est incliné par rapport à l'axe de basculement (8).

5. Dispositif d'actionnement selon l'une quelconque des revendications précédentes,
**caractérisé en ce que**
l'organe d'entraînement (5) peut être positionné par un élément de toit coulissant mobile ou par un actionneur.

6. Dispositif selon la revendication 5,
**caractérisé en ce que**
l'élément de toit coulissant mobile est positionné au moins en partie indépendamment du panneau de toit coulissant.

7. Dispositif selon la revendication 5,
**caractérisé en ce que**
l'élément de toit coulissant mobile au moins en partie indépendamment du panneau de toit coulissant est un panneau d'habillage situé sous le panneau du toit coulissant.

8. Dispositif d'actionnement selon l'une quelconque des revendications précédentes,
**caractérisé en ce que**
l'organe d'entraînement (5) est relié par un câble d'entraînement (11) à l'actionneur ou à l'élément de toit coulissant mobile au moins en partie indépendamment du panneau de toit coulissant.

9. Dispositif d'actionnement selon l'une quelconque des revendications précédentes,
**caractérisé en ce que**
la position de l'organe d'entraînement (5) et ainsi celle du déflecteur (4) dépend de la position du toit coulissant et/ou de la vitesse de circulation du véhicule et/ou de la vitesse de circulation de l'air au niveau du déflecteur (4).
